# FASCICULE DE BREVET EUROPEEN

(11) **EP 0 669 277 B1**
(45) Date de publication et mention de la délivrance du brevet: **28.04.1999**
(21) Numéro de dépôt: 95400407.3
(22) Date de dépôt: 27.02.1995
(51) Int. Cl.: B66C 1/12, B66C 13/08, B66C 13/06, B64D 1/22

(54) **Elingage pour le transport de charges par hélicoptère**
Schlinge zum Transportieren von Lasten mittels Hubschrauber
Sling for the transportation of loads by helicopter

(30) Priorité: 28.02.1994 FR 9402259
(43) Date de publication de la demande: 30.08.1995
(73) Titulaire: ELECTRICITE DE FRANCE Service National, 75008 Paris (FR)
(72) Inventeur: Ruaux, Philippe, F-13340 Rognac (FR); Chodot, Claude, F-84360 Merindol (FR); de Parny, Robert, F-13950 Cadolive (FR)
(74) Mandataire: Dubois-Chabert, Guy

(56) Documents cités:
- WO-A-91/17084
- DE-A- 2 644 781
- FR-A- 1 566 726
- FR-A- 2 416 192
- US-A- 2 343 045
- US-A- 3 838 836
- US-A- 4 378 919

## Description

### Domaine de l'invention

L'invention concerne l'héliportage de charges au moyen d'un dispositif d'élingage suspendu à un hélicoptère. Des conteneurs, des véhicules ou des matériaux de construction de bâtiments ou de travaux publics peuvent être ainsi transportés rapidement d'un endroit à un autre, particulièrement dans des endroits peu accessibles par les transports traditionnels, c'est-à-dire ferroviaires et routiers.

### Art antérieur et problème posé

L'héliportage est souvent utilisé pour le levage et le transport de charges relativement encombrantes. Il est ainsi utilisé pour le transport de matériel d'entretien des lignes à haute tension ou d'éléments de construction de bâtiments, notamment dans des pays accidentés, en particulier en montagne.

Or, lors du transport de charges volumineuses, celles-ci ont tendance à se mettre en auto-rotation, compte tenu de leurs formes diverses et non symétriques et de la résistance à la pénétration dans l'air. Cette rotation d'une charge par rapport à un axe vertical est néfaste pour le dispositif d'élingage ou de suspension de la charge et rend difficile l'atterrissage de l'ensemble.

Le but de l'invention est de remédier à cet inconvénient en proposant un dispositif d'élingage limitant au maximum la rotation autour d'un axe vertical de suspension d'une charge importante héliportée.

### Résumé de l'invention

A cet effet, l'objet principal de l'invention est un élingage pour le transport de charges par hélicoptère, comportant deux élingues porteuses aptes à être arrimées à un seul point d'un hélicoptère par leurs extrémités supérieures et dont leurs extrémités inférieures sont fixées chacune à une extrémité d'une unique poutre de fixation, de manière à être écartées l'une de l'autre, de de manière à ce que les deuxièmes extrémités inférieures soient écartées l'une de l'autre, et deux drisses latérales dont les extrémités supérieures sont aptes à être amarrées sur l'hélicoptère et dont les extrémités inférieures sont fixées chacune à une extrémité de la poutre pour empêcher la poutre de fixation et la charge qu'elle supporte de tourner pendant le transport autour d'un axe vertical.

Selon l'invention, on utilise des moyens de réglage de la tension des deux drisses.

Une réalisation préférentielle de l'invention prévoit que les deux drisses sont reliées entre elles par une drisse centrale passant dans la cabine de l'hélicoptère.

Dans ce cas, il est avantageux d'utiliser un dispositif pyrotechnique placé sur cette drisse centrale et commandable par le pilote pour sectionner cette drisse centrale, au cas où la charge est elle-même largable sur commande du pilote.

On utilise de préférence des moyens de réglage constitués de tendeurs à vis.

Dans une réalisation préférentielle de l'invention, la fixation des élingues principales et des drisses, de chaque côté de la poutre de fixation, s'effectue avec une double manille montée pivotante sur une extrémité de la poutre de fixation et possédant deux trous supérieurs de fixation dans lesquels sont fixées respectivement l'extrémité inférieure d'une élingue et l'extrémité inférieure d'une drisse.

Il est préférable que les fixations entre la drisse centrale et les drisses latérales s'effectuent avec des dispositifs comportant une éprouvette mécanique.

### Liste des figures

L'invention et ses différentes caractéristiques seront mieux comprises à la lecture de la description suivante qui est accompagnée de quatre figures représentant respectivement :
- figure 1, l'invention fixée à un hélicoptère ;
- figure 2, en coupe transversale, le haut de l'élingage selon l'invention fixé dans le bas de l'hélicoptère ;
- figure 3, une vue de côté de la figure 2 ; et
- figure 4, une vue partielle détaillée des fixations inférieures de l'élingage selon l'invention.

### Description détaillée d'un mode de réalisation

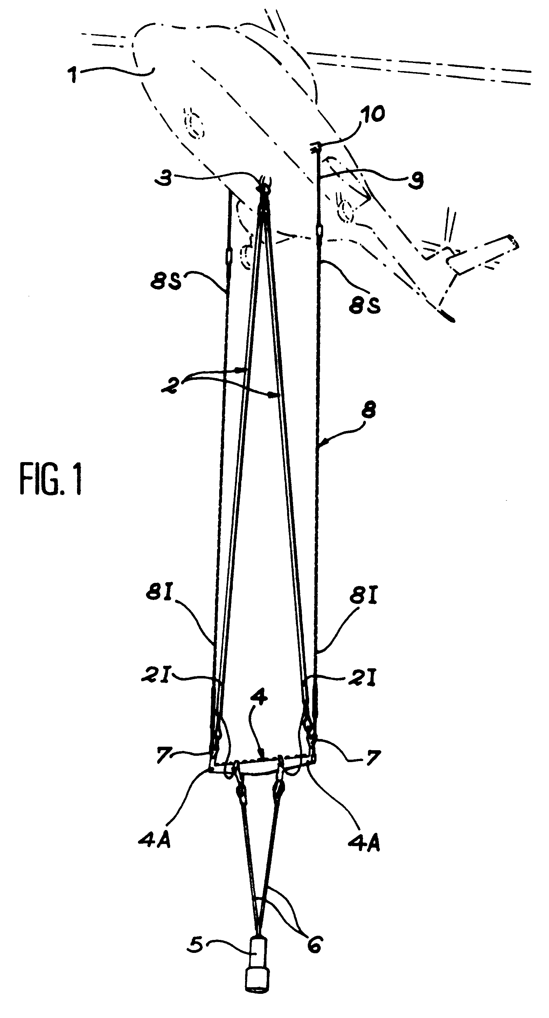

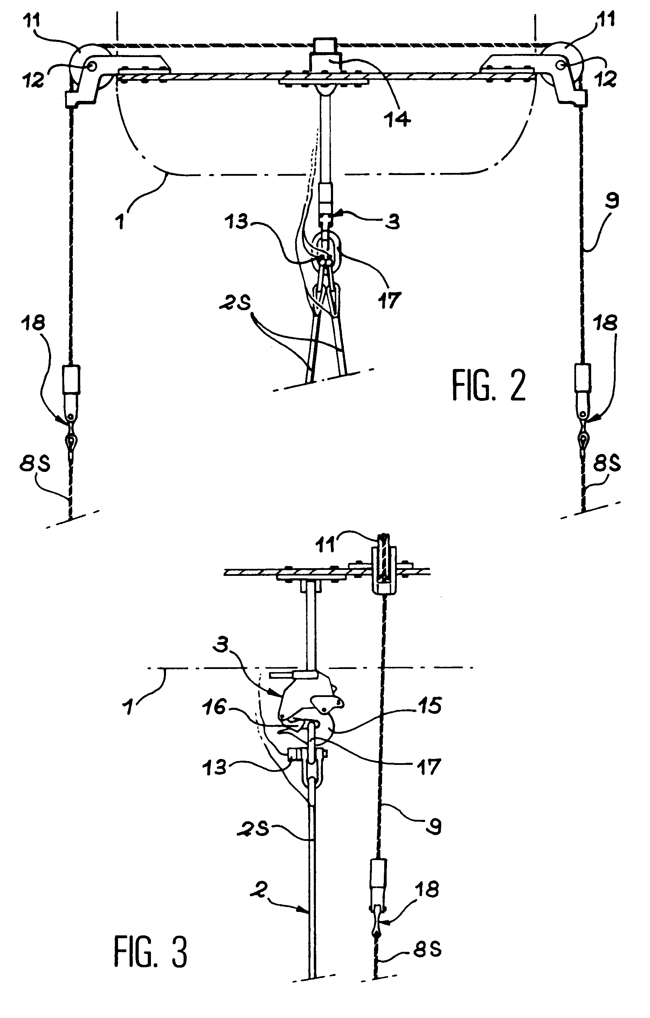

Sur la figure 1 est représenté en traits mixtes un hélicoptère 1 en vol auquel est suspendu l'élingage selon l'invention. Celui-ci sert à transporter une charge 5 d'un endroit à un autre. Le poids de la charge 5 est principalement soutenu par deux élingues porteuses 2 fixées à un point central de fixation 3 de l'hélicoptère 1, par exemple un anneau ou un crochet. Ce point d'ancrage ou de fixation sera détaillé plus loin en référence à la figure 3.

Le bas du dispositif porteur, constitué par les deux élingues porteuses 2, est complété d'une poutre de fixation 4 dont les deux extrémités 4A sont fixées chacune à une extrémité inférieure 2I des élingues porteuses 2. La charge 5 est suspendue à cette poutre de fixation 4 au moyen de deux élingues d'arrimage 6 fixées sur la poutre de fixation 4.

Pour éviter que la charge 5 ne subisse les rotations autour de l'axe vertical ou de l'axe passant par le point de fixation 3 à l'hélicoptère 1, lors du transport, le dispositif prévoit deux drisses latérales 8 dont les extrémités supérieures 8S sont fixées sur les côtés de l'hélicoptère 1. Les extrémités inférieures 8I de ces drisses latérales 8 sont elles-mêmes fixées aux extrémités 4A de la poutre de fixation 4, c'est-à-dire au même endroit où sont fixées les extrémités inférieures 2I des élingues porteuses. Ainsi, chaque extrémité 4A de la poutre de fixation est reliée à l'hélicoptère 1 par deux points d'ancrage séparés qui sont, d'une part, le point de fixation 3 et, d'autre part, un point latéral 10. Chaque extrémité 4A de la poutre de fixation 4 est donc assujettie à une position naturelle fixe de suspension par rapport à l'hélicoptère. Bien entendu, lors des accélérations, freinages et virages de celui-ci, les deux extrémités 4A de la poutre de fixation 4 subiront des variations de positions. On peut même ajouter à ce phénomène l'inertie de la masse de la charge 5 et la résistance à l'air de l'ensemble. Toutefois, la fixation par deux points 3 et 10 de chaque extrémité 4A de la poutre de fixation 4 permet un maintien sensiblement fidèle de l'orientation transversale de la poutre de fixation 4 et de sa charge 5 par rapport à la direction du parcours de l'hélicoptère 1.

En référence à la figure 2, la réalisation principale de l'élingage selon l'invention prévoit que les deux extrémités supérieures 8S des drisses latérales 8 soient reliées à l'hélicoptère par une drisse centrale 9 qui relie d'ailleurs les deux drisses 8 entre elles. Elle permet de répartir de manière égale la tension de ces deux drisses latérales 8.

La fixation de la drisse centrale 9 peut se faire au moyen de deux poulies de détour 11 dont les axes de rotation 12 sont parallèles à l'axe longitudinal de l'hélicoptère 1. La drisse centrale 9 peut donc pendre sur les côtés de l'hélicoptère de manière à maintenir très écartées les drisses latérales 8, alors que le point de fixation principal 3 de la charge 5 est central.

Les drisses latérales 8 sont réalisées de préférence en matériau synthétique. Par contre, les élingues porteuses 2 sont réalisées en matériau soit métallique soit synthétique. La poutre de fixation 4 est réalisée en alliage d'aluminium ou en acier inoxydable. Les crochets 17 sont réalisés de préférence en acier inoxydable.

Le point de fixation central 3 est généralement équipé d'un dispositif pyrotechnique 13 qui peut être commandé à volonté par le pilote, dans le but de larguer la charge transportée en cas de danger ou d'incident de vol dû à cette charge suspendue. Dans ce cas et dans celui de l'utilisation de l'élingage selon l'invention, il s'avère nécessaire de prévoir un deuxième dispositif pyrotechnique pour larguer les deux drisses latérales 8. Dans ce but, un deuxième dispositif pyrotechnique 14 est fixé à l'intérieur de l'hélicoptère 1 sur la trajectoire de la drisse centrale 9 à l'intérieur de la cabine. La commande de ces deux dispositifs pyrotechniques 13 et 14 peut être commune de manière à faciliter le largage de la charge transportée.

La figure 3 montre la drisse centrale 9 fixée à une extrémité supérieure 8S d'une drisse latérale 8 et enroulée autour de la poulie de détour 11. Une des deux élingues porteuses 2 est représentée par son extrémité supérieure 2S fixée à un crochet 15 au point de fixation central 3. Ce crochet peut être de n'importe quel type, de préférence avec un système de sécurité comprenant un loquet 16 permettant de garder un anneau 17 de suspension des deux extrémités supérieures 2S des élingues porteuses 2.

On note que l'épaisseur des élingues porteuses 2 est plus importante que l'épaisseur des câbles constituant les drisses latérales 8 et centrale 9. Ceci permet de garder la fonction de sustentation aux deux élingues porteuses 2 arrimées au centre de l'hélicoptère.

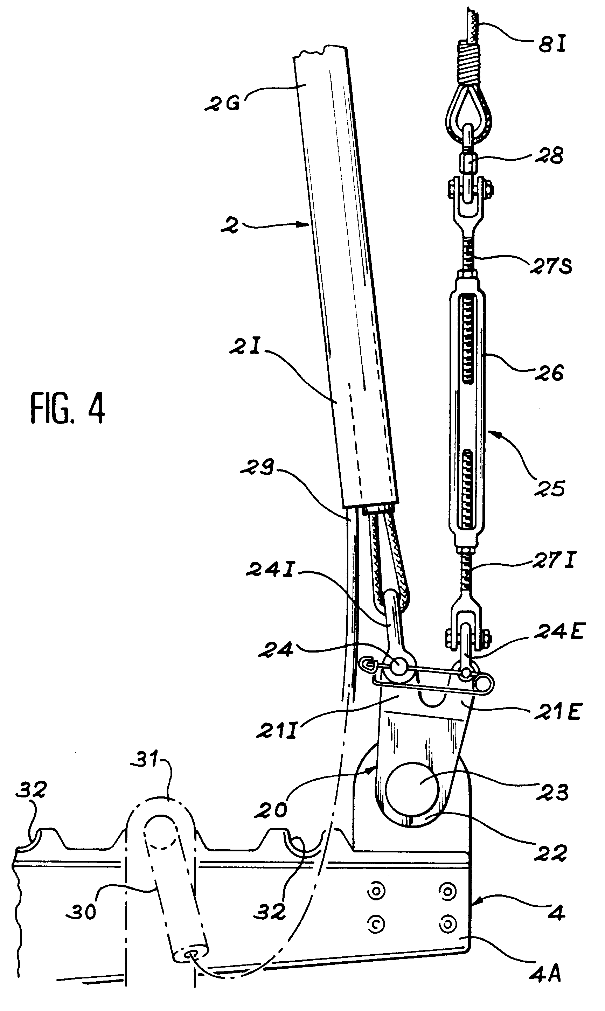

Toutefois, pour assurer une certaine efficacité suffisante des drisses latérales 8, ces dernières doivent être tendues suffisamment. Selon l'invention, un dispositif de réglage en tension est prévu et sera décrit au regard de la figure 4. Toutefois, dans le but d'éviter des surtensions dans les drisses latérales 8 et centrale 9, les fixations de ces drisses entre elles sont assurées par un dispositif de type manille 18 comportant une partie ayant une section calculée pour céder sous une tension déterminée. En d'autres termes, les éléments de fixation 18 entre la drisse centrale 9 et les drisses latérales 8 sont assurés par une éprouvette mécanique se comportant comme un fusible à partir d'une valeur déterminée.

La figure 4 montre une extrémité inférieure 2I d'une élingue porteuse 2, une extrémité 8I d'une drisse latérale et une extrémité 4A de la poutre de fixation 4. La liaison entre ces trois éléments se fait de préférence au moyen d'une double manille 20 comportant deux pattes extérieures 21E, deux pattes intérieures 21I et une tête 22 montée pivotante sur un axe horizontal 23 à l'extrémité 4A de la poutre de fixation 4. Sur la figure 4, la double manille 20 ayant été coupée longitudinalement, une seule patte intérieure 21I et une seule patte extérieure 21E sont représentées. Ces dernières possèdent chacune un trou permettant d'y loger l'axe d'un anneau de fixation respectif 24I et 24E. Chacun de ces anneaux 24I et 24E est fixé à une extrémité respective 2I d'une élingue porteuse 2 et 8I d'une drisse latérale.

Toutefois, cette dernière liaison se fait par l'intermédiaire d'un dispositif de réglage de la tension 25. Ce dernier est de préférence de type à vis. Il comporte un corps principal 26 dans les deux extrémités duquel sont vissées deux tiges filetées 27I et 27S. La tige filetée inférieure 27I est reliée à l'anneau de fixation extérieur 24E, tandis que la tige filetée supérieure 27S est reliée à un anneau de fixation 28 de l'extrémité inférieure 8I d'une drisse latérale.

Compte tenu des filetages inversés des deux tiges filetées 27I et 27S, la rotation du corps 27 permet le rapprochement des deux tiges filetées 27S et 27I. De même, une rotation dans le sens inverse du corps 26 permet leur écartement. Il est ainsi permis de régler la tension de chaque drisse latérale au niveau de ce dispositif de réglage à vis.

On note que pour une valeur déterminée de tension, c'est-à-dire de réglage du vissage du corps 26 dans les tiges filetées 27S et 27I, l'orientation de la double manille 20 autour de l'axe 23 prend une position déterminée. Celle représentée sur la figure 4 aligne l'élingue porteuse 2 avec l'axe 24 de son anneau de fixation 24I et l'axe de rotation 23 de la double manille 20. Ceci signifie que l'élingue porteuse 2 assume la quasi totalité de la charge héliportée, la drisse latérale étant relâchée. Il est aisé de comprendre qu'un serrage du dispositif 25 en rotation du corps 26 permet une tension de la drisse latérale correspondante et un léger pivotement vers l'intérieur de la double manille 20 autour de l'axe 23.

L'élingue porteuse 2 a été représentée avec une gaine 2G. Celle-ci protège en effet l'élingue porteuse 2, mais également un câble électrique 29 relié à un système de commande 30 actionnant un crochet électrique 31 des élingues de manutention, repérées 6, sur la figure 1. En effet, ce crochet électrique 31 est placé dans un cran 32 de la poutre de fixation 4 prévu à cet effet. La commande par le pilote permet de larguer la charge à un endroit déterminé sans l'intervention d'un opérateur.

Dans une autre réalisation possible de l'invention, la drisse centrale 9 peut être supprimée. Dans ce cas, les deux drisses latérales 8 sont chacune enroulées autour d'une bobine dont l'enroulement peut être commandé par un opérateur dans l'hélicoptère. Ceci permet d'agir principalement sur la position de la poutre de fixation 4.

Sur la figure 4, la poutre est représentée avec une structure de profilé en I ou en H. On peut en outre envisager une poutre de fixation en treillis ou rigide en plaque d'acier.

Un dispositif calculateur équipe l'hélicoptère pour permettre au pilote de connaître les valeurs de charge embarquées. Le pilote peut ainsi contrôler la charge dans chacune des drisses latérales 8 et la charge supportée par les élingues porteuses 2.

Dans l'utilisation prévue, une tension de 4 000 à 5 000 Newtons est prévue dans les drisses latérales.

En cas de surchage accidentelle, les éprouvettes mécaniques constituant des éléments fusibles de fixation 18 entre la drisse centrale 9 et les drisses latérales 8 opèrent leurs fonctions. Le pilote peut alors envisager le largage de la charge 5. Il agit alors au moyen du premier moyen dispositif technique, repéré 13 sur la figure 2, pour larguer les deux élingues porteuses 2 et centrales, la poutre de fixation 4 et la charge héliportée 5.

Le dispositif d'élingage selon l'invention assure au personnel navigant et surtout au personnel devant réceptionner les charges une plus grande sécurité du fait que celles-ci ne tournent plus.

On précise que le dispositif d'élingage selon l'invention peut avoir une largeur et une longueur variables en fonction des besoins de la configuration de travaux à réaliser.

## Revendications

1. Elingage pour le transport de charges par hélicoptère comportant deux élingues porteuses (2) aptes à être arrimées à un seul point (3) d'un hélicoptère (1) par leur première extrémité supérieure (2S) et dont chaque deuxième extrémité inférieure (2I) est fixée à une extrémité (4A) d'une unique poutre de fixation (4), de manière à ce que ces deuxièmes extrémités inférieures (2I) soient écartées l'une de l'autre, et deux drisses latérales (8) dont les premières extrémités supérieures (8S) sont aptes à être amarrées sur l'hélicoptère (1) et dont les extrémités inférieures (2I) sont fixées chacune à une extrémité (4A) de la poutre de fixation (4), destinées à empêcher la poutre de fixation (4) et la charge qu'elle transporte de tourner pendant le transport autour d'un axe vertical,
caractérisé en ce qu'il comprend des moyens de réglage de la tension des deux drisses latérales (8) pour empêcher effectivement la poutre de fixation (4) et la charge qu'elle transporte (5) de tourner pendant le transport autour d'un axe vertical.

2. Elingage selon la revendication 1, arrimé à un hélicoptère, caractérisé en ce que les deux drisses latérales (8) sont reliées entre elles par une drisse centrale (9) passant dans la cabine de l'hélicoptère (1).

3. Elingage selon la revendication 2, le point de fixation (3) étant équipé d'un premier dispositif pyrotechnique (13), caractérisé en ce qu'il comprend un deuxième dispositif pyrotechnique (14) placé sur la drisse centrale (9) pouvant être commandé par le pilote, conjointement au premier dispositif pyrotechnique (13).

4. Elingage selon la revendication 1, caractérisé en ce que les moyens de réglage sont constitués par un tendeur à vis (25) placé entre l'extrémité inférieure (8I) de chaque drisse latérale (8) et de moyens de fixation sur une extrémité (4A) de la poutre de fixation (4).

5. Elingage selon la revendication 4, caractérisé en ce que la fixation des élingues principales (2) et des drisses latérales (8) se fait de chaque côté de la poutre de fixation (4) avec une double manille (20) montée pivotante sur une extrémité (4A) de la poutre de fixation (4) et possédant deux trous supérieurs de fixation dans lesquels sont fixés respectivement l'extrémité inférieure (2I) d'une élingue porteuse (2) et un anneau de fixation (24E) du tendeur à vis (25), lui-même fixé à une drisse latérale (8).

6. Elingage selon la revendication 2, caractérisé en ce que la fixation entre la drisse centrale (9) et les drisses latérales (8) se fait au moyen d'un dispositif comportant une éprouvette mécanique (18).

## Claims

1. Sling system for transporting loads by helicopter, comprising two carrying slings (2) which can be anchored to a single point (3) on a helicopter (1) by their first, upper, end (2S), and each second, lower, end (2I) of which is fixed to one end (4A) of a single attachment beam (4), so that these second, lower, ends (2I) are spaced apart, and two lateral lines (8), the first, upper, ends (8S) of which can be anchored to the helicopter (1), and the lower ends (8I) of which are each fixed to one end (4A) of the attachment beam (4), in order to prevent the attachment beam (4) and the load (5) it is transporting from turning about a vertical axis during transport,
characterized in that it comprises means for adjusting the tension in the two lateral lines (8).

2. Sling system according to Claim 1, anchored to a helicopter, characterized in that the two lateral lines (8) are connected by a central line (9) passing through the cabin of the helicopter (1).

3. Sling system according to Claim 2, the attachment point (3) being equipped with a first pyrotechnic device (13), characterized in that it comprises a second pyrotechnic device (14) placed on the central line (9) which can be operated by the pilot together with the first pyrotechnic device (13).

4. Sling system according to Claim 1, characterized in that the adjustment means consist of a screw-type tensioner (25) placed between the lower end (8I) of each lateral line (8) and means of attachment to one end (4A) of the attachment beam (4).

5. Sling system according to Claim 4, characterized in that the main slings (2) and the lateral lines (8) are attached on each side of the attachment beam (4) using a double shackle (20) pivotably mounted on one end (4A) of the attachment beam (4) and having two upper attachment holes in which are respectively attached the lower end (2I) of a carrying sling (2) and a ring (24E) for attaching the screw-type tensioner (25) which is itself attached to a lateral line (8).

6. Sling system according to Claim 2, characterized in that the central line (9) and the lateral lines (8) are joined together by means of a device which comprises a mechanical test piece (18).

## Patentansprüche

1. Seilgeschirr zum Transportieren von Lasten mittels Hubschrauber mit zwei Tragseilen (2), die durch ihr erstes, oberes Ende (2S) in einem einzigen Punkt (3) an einem Hubschrauber (1) festgemacht werden können und deren zweites, unteres Ende (2I) jeweils an einem Ende (4A) eines einzigen Befestigungsträgers (4) festgemacht wird, so daß diese zweiten, unteren Enden (2I) voneinander beabstandet sind, zwei Seitenseile (8) umfassend, deren erste, obere Enden (8S) an dem Hubschrauber (1) festgemacht werden können und deren untere Enden (2I) jeweils an einem Ende (4A) des Befestigungsträgers (4) festgemacht werden, um zu verhindern, daß sich der Befestigungsträger (4) und die Last (5), die er trägt, wahrend des Transports um eine vertikale Achse drehen,
**dadurch gekennzeichnet,**
daß es Spannungseinstelleinrichtungen der beiden Seitenseile (8) umfaßt.

2. Seilgeschirr nach Anspruch 1, festgemacht an einem Hubschrauber, dadurch gekennzeichnet, daß die beiden Seitenseile (8) miteinander verbunden sind durch ein Zentralseil (9), das durch die Kabine des Hubschraubers (1) verläuft.

3. Seilgeschirr nach Anspruch 2, wobei der Befestigungspunkt (3) mit einer ersten pyrotechnischen Vorrichtung (13) ausgestattet ist, dadurch gekennzeichnet, daß es eine zweite pyrotechnische Vorrichtung (14) umfaßt, angeordnet in dem Zentralseil (9), die durch den Piloten gemeinsam mit der ersten pyrotechnischen Vorrichtung (13) gesteuert werden kann.

4. Seilgeschirr nach Anspruch 1, dadurch gekennzeichnet, daß die Einstelleinrichtungen durch ein Schraubenspannschloß (25) gebildet werden, das sich zwischen dem unteren Ende (8I) jedes seitlichen Seils (8) und Einrichtungen zum Festmachen an einem Ende (4A) des Befestigungsträgers (4) befindet.

5. Seilgeschirr nach Anspruch 4, dadurch gekennzeichnet, daß das Befestigen der Hauptseile (2) und der Seitenseile (8) auf jeder Seite des Befestigungsträgers (4) erfolgt, mit einer Doppellasche (20), die schwenkbar an einem Ende (4A) des Befestungsträgers (4) angebracht ist und zwei obere Befestigungslöcher umfaßt, in denen jeweils die unteren Enden (2I) eines Tragseils (2) und eines Befestigungsrings (24E) des Schraubenspannschlosses (25) festgemacht sind, das seinerseits selbst an einem Seitenseil (8) festgemacht ist.

6. Seilgeschirr nach Anspruch 2, dadurch gekennzeichnet, daß die Befestigung zwischen dem Zentralseil (9) und den Seitenseilen (8) mittels einer Vorrichtung erfolgt, die einen Zerreißstab bzw. eine Sollbruchstelle umfaßt.
